# EUROPEAN PATENT APPLICATION

(11) **EP 4 721 549 A1**
(43) Date of publication of application: **08.04.2026**
(21) Application number: 24815623.4
(22) Date of filing: 31.05.2024
(51) Int. Cl.: A01D 46/30, A01D 46/00

(54) **AGRICULTURAL WORK APPARATUS, AGRICULTURAL WORK METHOD, AND PROGRAM**

(30) Priority: 31.05.2023 JP 2023089350
(71) Applicant: Inaho, Inc., Fujisawa-shi, Kanagawa, 251-0037 (JP)
(72) Inventor: DOSHIN, Katsuhiro, Fujisawa-shi, Kanagawa 251-0037 (JP); KARAKO, Yukihisa, Fujisawa-shi, Kanagawa 251-0037 (JP)
(74) Representative: EIP
(86) International application number: PCT/JP2024/020078
(87) International publication number: WO 2024/248143

(57) **Abstract**

An agricultural work apparatus includes an arm apparatus having a hand apparatus that performs agricultural work on a target group including a plurality of targets, an imaging apparatus that images the target group, a target position estimation unit that estimates a position of the target group based on image information obtained by the imaging apparatus imaging the target group, an arm apparatus control unit that moves the arm apparatus relative to the target group based on the estimated position, and a hand apparatus control unit that controls the hand apparatus to perform agricultural work on the target group at the position based on the estimated position. This makes it possible to provide a technique for automatically executing agricultural work on the target group including the plurality of targets.

## Description

### Technical Field

The present invention relates to an agricultural work apparatus, an agricultural work method, and a program.

### Background Art

Conventionally, in large-scale farms, harvesting work has been handled by manpower tactics, and the burden of labor costs is large. Large-scale farms have very long distances of 50 m to 100 m per lane, and travel costs are particularly high with manpower tactics. Therefore, there is a demand for automation (mechanization) of harvesting work. For example, Patent Literature 1 describes an apparatus capable of automatically harvesting vegetables having outer leaves, represented by broccoli.

### Citation List

### Patent Literature

Patent Literature 1: Patent Publication JP-A-2018-046752

### Summary of Invention

### Technical Problem

However, a technique for automatically executing harvesting work on a target group including a plurality of targets (for example, a cluster including a plurality of tomatoes) has not been realized.

Therefore, the disclosed technology aims to provide a technique for automatically executing agricultural work on a target group including a plurality of targets.

### Solution to Problem

An agricultural work apparatus according to one aspect of the disclosed technology includes an arm apparatus having a hand apparatus that performs agricultural work on a target group including a plurality of targets, an imaging apparatus that images the target group, a target position estimation unit that estimates a position of the target group based on image information obtained by the imaging apparatus imaging the target group, an arm apparatus control unit that moves the arm apparatus relative to the target group based on the estimated position, and a hand apparatus control unit that controls the hand apparatus to perform agricultural work on the target group at the position based on the estimated position.

### Advantageous Effect of Invention

According to the present invention, it becomes possible to automatically execute agricultural work on a target group including a plurality of targets.

### Brief Description of Drawings

[Figure 1] Figure 1 is a diagram showing an example of a harvesting robot according to an embodiment.
[Figure 2] Figure 2 is a diagram showing an example of a block configuration of the harvesting robot according to the embodiment.
[Figure 3] Figure 3 is a diagram showing an example of a functional configuration of a control PC according to the embodiment.
[Figure 4] Figure 4 is a diagram showing an example of a hand unit according to the embodiment.
[Figure 5] Figure 5 is a diagram showing an example of a right belt unit according to the embodiment.
[Figure 6] Figure 6 is a diagram showing an example of a cross-sectional view of the right belt unit shown in Figure 5.
[Figure 7] Figure 7 is a diagram showing another example of the right belt unit according to the embodiment.
[Figure 8] Figure 8 is a diagram showing another example of the hand unit according to the embodiment.
[Figure 9] Figure 9 is a diagram showing another example of the right belt unit according to the embodiment.
[Figure 10] Figure 10 is a rear view showing an example of the hand unit according to the embodiment.
[Figure 11] Figure 11 is a diagram showing another example of the hand unit according to the embodiment.
[Figure 12] Figure 12 is a diagram showing another example of the hand unit according to the embodiment.
[Figure 13] Figure 13 is a top view showing an example of the hand unit according to the embodiment.
[Figure 14] Figure 14 is a side view showing an example of the hand unit according to the embodiment.
[Figure 15] Figure 15 is a diagram showing an example of a left belt unit and a conveying unit according to the embodiment.
[Figure 16] Figure 16 is a diagram showing another example of the left belt unit and the conveying unit according to the embodiment.
[Figure 17] Figure 17 is a flowchart showing an example of an information processing flow of the harvesting robot according to the embodiment.
[Figure 18] Figure 18 is a flowchart showing another example of an information processing flow of the harvesting robot according to the embodiment.
[Figure 19] Figure 19 is a flowchart showing another example of an information processing flow of the harvesting robot according to the embodiment.

### Description of Embodiments

Hereinafter, embodiments of the present invention will be described with reference to the attached drawings. The following embodiments are examples for explaining the present invention and are not intended to limit the present invention only to those embodiments. Further, the present invention can be variously modified without departing from the gist thereof. Furthermore, in each drawing, the same reference numerals are assigned to the same components as much as possible, and duplicate descriptions are omitted as much as possible.

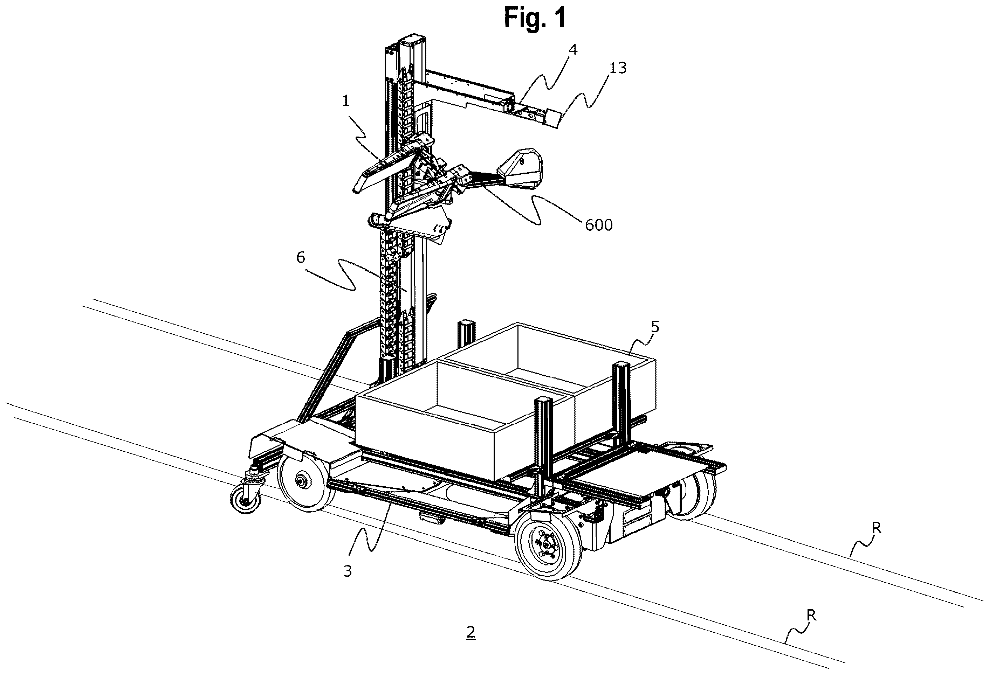

Figure 1 is a diagram showing an example of a harvesting robot (agricultural work apparatus) according to an embodiment of the present invention. The harvesting robot 2 is, for example, a robot that automatically performs harvesting work (agricultural work) on a target group including a plurality of targets cultivated in a farm. The harvesting robot 2 includes, for example, an arm unit 600 (arm apparatus) having a hand unit 1 (hand apparatus) that performs harvesting work (agricultural work) on a target group including a plurality of targets cultivated in a farm, a camera unit 4 including a harvesting camera 13 (imaging apparatus) that images the target group, a slider 6 for adjusting the position of the arm unit 600, a harvesting box 5 for storing harvesting targets (or target groups), and a vehicle body portion 3 that enables the harvesting robot 2 to move on a lane R disposed in the farm.

For example, the harvesting robot 2 is a harvesting robot capable of harvesting a cluster (target group) formed by a plurality of tomatoes (a plurality of targets) gathered together (agricultural work) in one stroke by the arm unit 600. For example, the harvesting robot 2 recognizes a cluster having many red fruits (targets) with the harvesting camera 13 (imaging apparatus) and causes the arm unit 600 to approach the recognized cluster. The harvesting robot 2 applies force to the cluster in a twisting manner with belts provided in the hand unit 1 to separate a plurality of fruits from the cluster.

Here, an overview of the harvesting robot 2 according to the present embodiment will be described. As described above, conventionally, in large-scale farms, harvesting work has been solved by manpower tactics, and the burden of labor costs is large. Large-scale farms have very long distances of 50 m to 100 m per lane, and travel costs are particularly high with manpower tactics. There is a demand for automation (mechanization), but currently, automatic harvesting has not been put into practical use. That is, there is an issue of cost-effectiveness. The difficulty in improving cost-effectiveness lies in the trade-off between harvesting rate and harvesting speed, and in that the unit price of tomatoes is smaller than the harvesting unit price of an automatic harvesting robot. Regarding the trade-off between harvesting rate and harvesting speed, when an automatic harvesting robot tries to harvest without leaving anything like a person, the harvesting speed tends to decrease. Regarding the fact that the unit price of tomatoes is smaller than the harvesting unit price of an automatic harvesting robot, the cause is that it is difficult to make the harvesting unit price of an automatic harvesting robot (machine cost / durable stroke number) lower compared to the unit price of tomatoes.

There are the following countermeasures regarding the trade-off between harvesting rate and harvesting speed. For example, by having an automatic harvesting robot harvest tomatoes at night and then having a person harvest the remainder using a cart, it is possible to mutually complement the aspects that the automatic harvesting robot is not good at (harvesting without leaving anything) and the aspects that people are not good at (increasing the amount of work). Also, regarding the fact that the unit price of tomatoes is smaller than the harvesting unit price of an automatic harvesting robot, there are the following countermeasures. For example, by adopting an automatic group-harvesting hand that can harvest four to six pieces simultaneously in one stroke, harvesting efficiency several times that of conventional methods can be expected.

Therefore, the harvesting robot 2 according to the present embodiment includes an arm apparatus having a hand apparatus that performs agricultural work on a target group including a plurality of targets, an imaging apparatus that images the target group, a target position estimation unit that estimates a position of the target group based on image information obtained by the imaging apparatus imaging the target group, an arm apparatus control unit that moves the arm apparatus relative to the target group based on the estimated position, and a hand apparatus control unit that controls the hand apparatus to perform agricultural work on the target group at the position based on the estimated position. According to the harvesting robot 2 according to the present embodiment, agricultural work can be automatically executed on a target group including a plurality of targets.

"Agricultural work" refers to work for production in agriculture. Agricultural work includes, for example, at least one of gripping, cutting, separating from a cluster, and harvesting of tomatoes (targets) cultivated in a farm. The "target" of agricultural work is not limited to tomatoes, which are agricultural products, and may include other vegetables, fruits, grains, etc. that form a target group (for example, a cluster) including a plurality of targets.

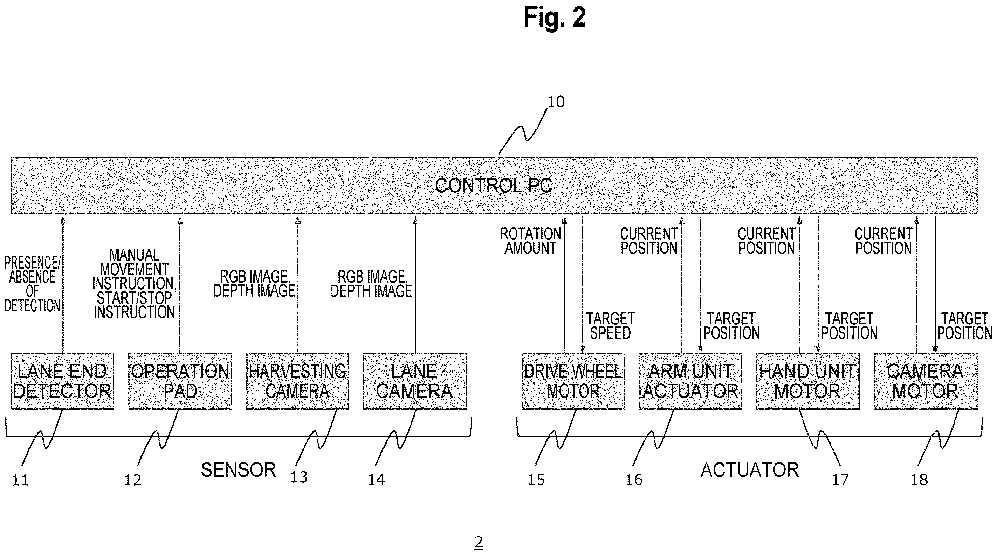

The harvesting robot 2 automatically executes agricultural work based on the agricultural work content preset by a user who manages the harvesting robot 2. The user sets the content of agricultural work to be executed by the harvesting robot 2 via a mobile terminal (not shown) operated by the user. In this case, the user transmits setting information to a control PC 10 (Personal Computer) (see Figure 2) provided in the harvesting robot 2 via the mobile terminal.

In the following, the harvesting robot 2 is described as an agricultural work apparatus that automatically executes agricultural work, but the user can appropriately perform manual operations while the harvesting robot 2 is operating automatically.

As the agricultural work content, the user sets, for example, the range of harvesting work (for example, at least a partial area within the farm) of targets (for example, tomatoes) of agricultural work. The user sets, for example, the movement route of the harvesting robot 2 (for example, the route along which the harvesting robot 2 moves in the farm, as well as the start point in the lane R where the harvesting robot 2 starts agricultural work and the end point in the lane R where agricultural work is finished). The user may set a direction change (switching) point of the harvesting robot 2 in the lane R, for example, the end of the lane R (lane end).

The harvesting robot 2 moves along a preset route on the lane R within the farm. As an example only, the harvesting robot 2 may, for example, stop after moving about several tens of centimeters, confirm the position of the tomato cluster, and execute harvesting work. Then, when the harvesting work is completed, the harvesting robot 2 may move again about several tens of centimeters along the route and repeat executing harvesting work on another tomato cluster.

Figure 2 is a diagram showing an example of a block configuration of the harvesting robot according to the embodiment. As shown in Figure 2, for example, the harvesting robot 2 includes a control PC 10, a sensor group including a plurality of sensors, and an actuator group including a plurality of actuators. The control PC 10 is, for example, a personal computer or the like, and controls each component for the harvesting robot 2 to execute agricultural work.

For example, the sensor group includes a lane end detector 11 that detects a lane end of the lane R shown in Figure 1, an operation pad 12 that accepts operation input from the user, a harvesting camera 13 for imaging harvesting targets, and a lane camera 14 for imaging the lane R.

The lane end detector 11 transmits, for example, information regarding the presence or absence of detection of a lane end to the control PC 10. The lane end detector 11 can detect, for example, a lane end of the lane R shown in Figure 1. The lane end detection method of the lane end detector 11 is arbitrary. The lane end detector 11 may detect that the current position is a lane end by detecting the presence or absence of contact with a structure disposed at the lane end indicating the lane end. The lane end detector 11 may detect that the current position is a lane end by recognizing code information such as a QR code disposed at the lane end with a camera or the like. The lane end detector 11 may be, for example, a proximity sensor. In this case, for example, a transmitter that transmits information indicating a lane end is disposed at the lane end, and the lane end detector 11 may detect the lane end by receiving the information from the transmitter.

The operation pad 12 transmits, for example, information regarding manual movement instructions and start/stop instructions for the harvesting robot 2 input from the user to the control PC 10.

The harvesting camera 13 transmits, for example, at least one of an RGB image and a depth image acquired by imaging surroundings including the target group to the control PC 10. The harvesting camera 13 has, for example, a function of at least one of a camera capable of generating RGB images and a camera capable of generating depth images.

The lane camera 14 transmits, for example, at least one of an RGB image and a depth image acquired by imaging surroundings including at least a part of the lane R to the control PC 10. The lane camera 14 has, for example, a function of at least one of a camera capable of generating RGB images and a camera capable of generating depth images.

For example, the actuator group includes a drive wheel motor 15, an arm unit actuator 16, a hand unit motor 17, and a camera motor 18.

The drive wheel motor 15 is, for example, a motor for driving and controlling drive wheels provided in the vehicle body portion 3 shown in Figure 1. The drive wheel motor 15 executes, for example, transmitting information regarding the rotation amount of the drive wheels to the control PC 10 and receiving information regarding the target speed of the drive wheels from the control PC 10.

The arm unit actuator 16 controls, for example, the arm unit 600 shown in Figure 1. The arm unit actuator 16 executes, for example, transmitting information regarding the current position of the arm unit 600 to the control PC 10 and receiving information regarding the target position of the arm unit 600 from the control PC 10. The arm unit actuator 16 may execute, for example, transmitting information regarding the current orientation/inclination of the arm unit 600 to the control PC 10 and receiving information regarding the target orientation/target inclination of the arm unit 600 from the control PC 10.

The hand unit motor 17 controls, for example, the hand unit 1 shown in Figure 1. The hand unit motor 17 executes, for example, transmitting information regarding the current position of the hand unit 1 to the control PC 10 and receiving information regarding the target position of the hand unit 1 from the control PC 10. The hand unit motor 17 may execute, for example, transmitting information regarding the current orientation/inclination of the hand unit 1 to the control PC 10 and receiving information regarding the target orientation/target inclination of the hand unit 1 from the control PC 10.

The camera motor 18 executes, for example, transmitting information regarding the current position of at least one of the harvesting camera 13 and the lane camera 14 to the control PC 10 and receiving information regarding the target position of at least one of the harvesting camera 13 and the lane camera 14 from the control PC 10. The camera motor 18 may execute, for example, transmitting information regarding the current orientation/inclination of at least one of the harvesting camera 13 and the lane camera 14 to the control PC 10 and receiving information regarding the target orientation/target inclination of at least one of the harvesting camera 13 and the lane camera 14 from the control PC 10.

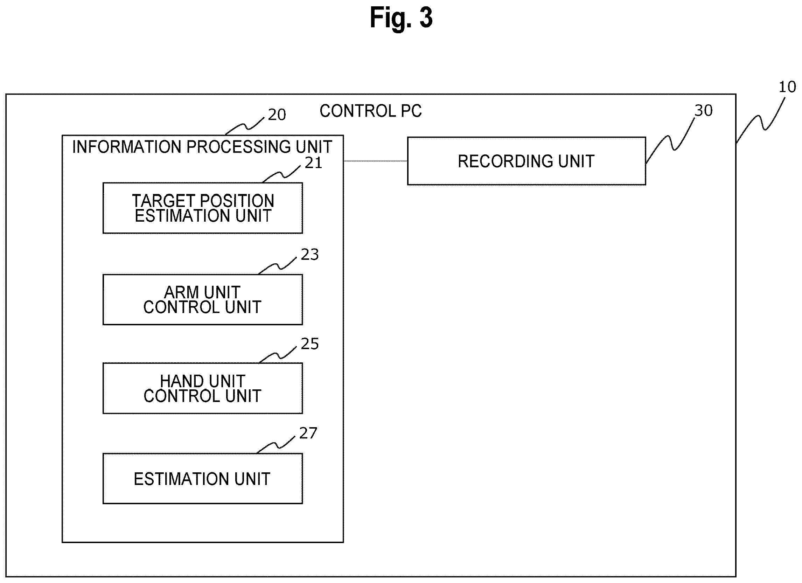

Figure 3 is a diagram showing an example of a functional configuration of the control PC according to the embodiment. The control PC 10 includes, for example, a central processing unit that controls each function for the harvesting robot 2 to execute agricultural work. The central processing unit is, for example, a CPU, MPU, or the like, and operates according to a program stored in a recording unit 30.

For example, the control PC 10 (central processing unit) functionally includes a target position estimation unit 21, an arm unit control unit 23 (arm apparatus control unit), a hand unit control unit 25 (hand apparatus control unit), and an estimation unit 27.

The target position estimation unit 21 estimates, for example, the position of a tomato cluster (target group) based on image information obtained by the harvesting camera 13 (imaging apparatus) shown in Figures 1 and 2 imaging the tomato cluster.

The arm unit control unit 23 moves, for example, the arm unit 600 shown in Figure 1 relative to the tomato cluster based on the position of the tomato cluster estimated by the target position estimation unit 21.

The hand unit control unit 25 controls, for example, the hand unit 1 shown in Figure 1 to execute harvesting work (agricultural work) on the tomato cluster at the position based on the position of the tomato cluster estimated by the target position estimation unit 21. The hand unit control unit 25 adjusts the orientation or inclination of the hand unit 1 according to the orientation or inclination of the tomato cluster. The hand unit control unit 25 controls the hand unit 1 so that the hand unit 1 applies a frictional force to the tomato cluster. The hand unit control unit 25 controls a plurality of belt portions (for example, a right belt 101 and a left belt 201) so that the plurality of belt portions twist the tomato cluster while sandwiching the tomato cluster.

The estimation unit 27 estimates, for example, the success probability of harvesting work on the tomato cluster based on image information obtained by the harvesting camera 13 shown in Figures 1 and 2 imaging a predetermined range including the tomato cluster and the shape of the hand unit 1.

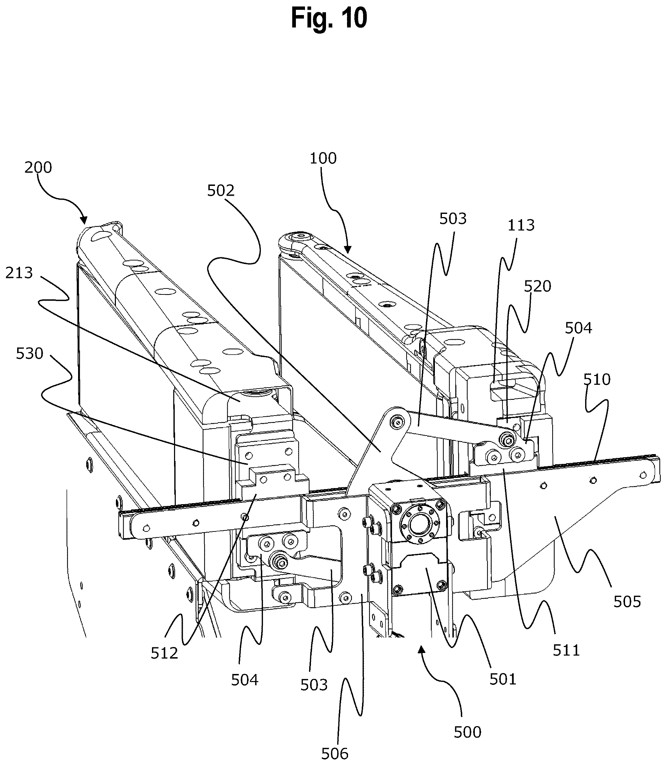

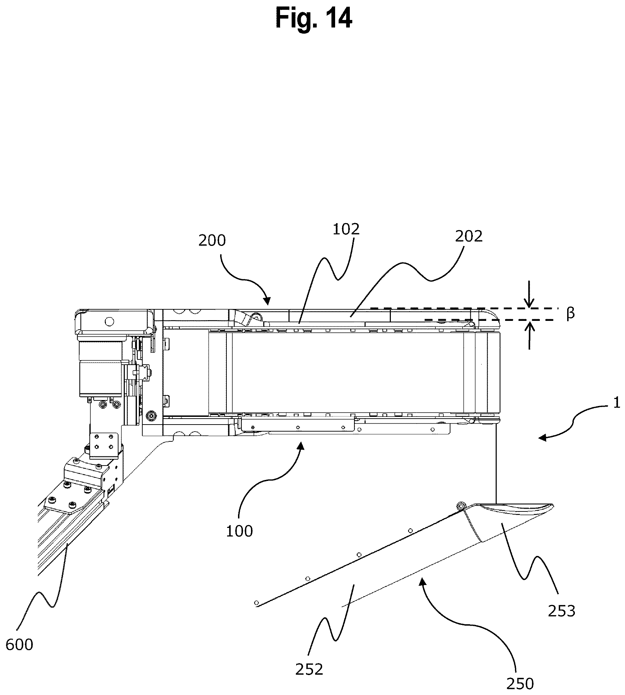

Here, the harvesting robot 2 is, for example, a harvesting apparatus for harvesting fruits. For example, as shown in Figure 1, the harvesting robot 2 includes an arm unit 600 and a hand unit 1, and the hand unit 1 has belts. At the time of harvesting, the harvesting robot 2 harvests fruits by the belts coming into contact with the fruits. Here, for example, the features of the hand unit 1 of the harvesting robot 2 are as follows.
(1) The belts provided in the hand unit 1 harvest by rotating fruits.
(2) A plurality of belts (for example, right belt and left belt) is disposed facing each other so as to sandwich fruits.
(3) The plurality of belts disposed facing each other harvest fruits by operating in opposite directions to each other at the time of harvesting.
(4) The belts have a width that sufficiently covers at least one fruit.
(5) The opening width of the plurality of belts of the hand unit 1 is adjustable.
(5-1) The opening width can be adjusted by slide rails (slide rail 510 shown in Figure 10).
(5-2) Only the belt units are exposed on the fruit side beyond the slide rails.
(5-3) Belt drive portions are disposed on the arm unit 600 side of the slide rails.
(6) The belts are disposed tilted.
(6-1) The belts are disposed tilted with respect to the direction of the stems of fruits.
(6-2) A trough (for example, a half pipe 252 shown in Figure 14, etc.) is disposed below the tilted belt units.
(6-3) One end of the trough has a convex shape, and the other side is open.
(6-4) A stopper is disposed at the open end of the trough.
(6-5) Fruits harvested by the belts fall into the trough and are stored in a harvesting apparatus (harvesting box 5 shown in Figure 1).
(7) The tip rollers of the belts have the same diameter or less than the other rollers.
(7-1) The belt width widens from the tip rollers toward the root rollers.
(7-2) The tip of the trough is disposed closer to the fruit side than the tip rollers.
(8) The belts on the fruit side of the hand unit 1 protrude more than the other belts.
(8-1) The cover of the hand unit 1 is disposed at a lowered position.

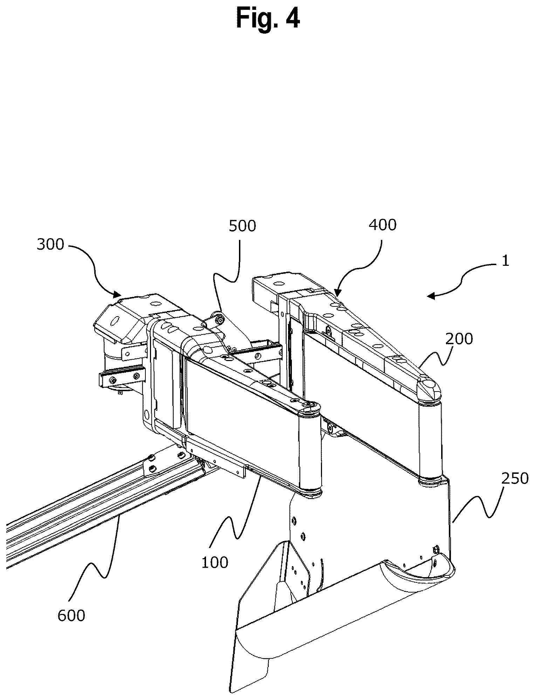

With reference to Figures 4 to 16, a specific configuration of the hand unit 1 of the harvesting robot 2 having at least the features (1) to (8) described above will be described.

Figure 4 is a diagram showing an example of the hand unit according to the embodiment. As shown in Figure 4, the hand unit 1 is connected to the arm unit 600. The hand unit 1 includes, for example, a right belt unit 100 including a right motor unit 300, a left belt unit 200 including a left motor unit 400, and a hand opening/closing unit 500 that controls the opening and closing of the right belt unit 100 and the left belt unit 200. The left belt unit 200 includes, for example, a conveying unit 250.

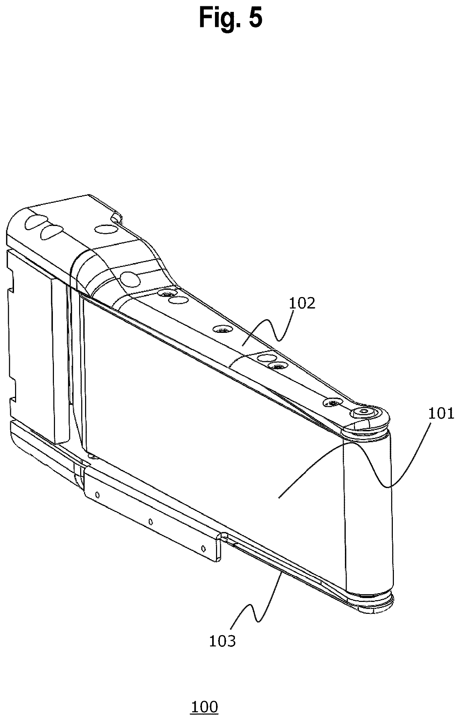

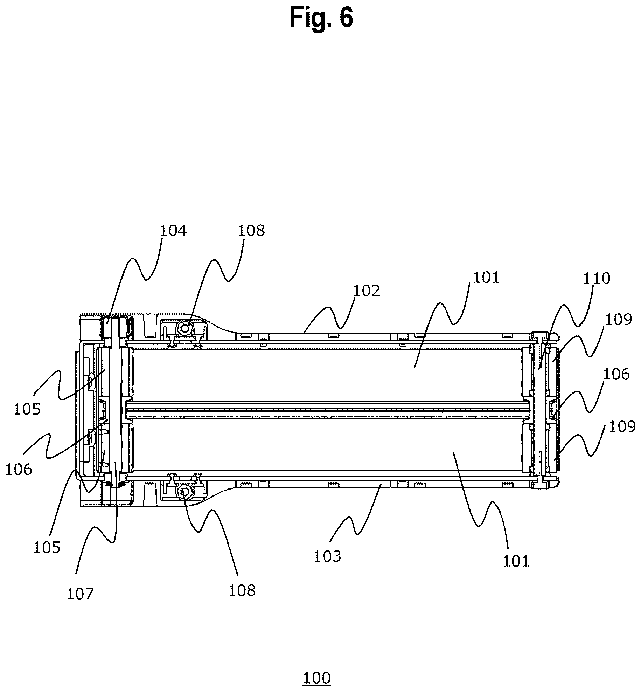

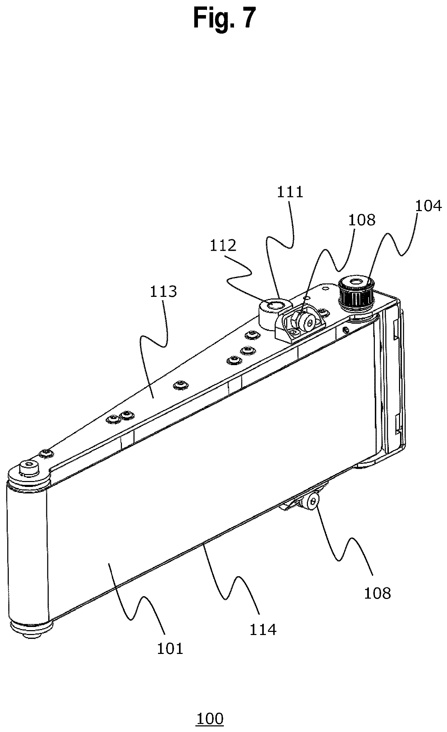

An example of the configuration of the right belt unit will be described with reference to Figures 5 to 7. Figure 5 is a diagram showing an example of the right belt unit according to the embodiment. Figure 6 is a diagram showing an example of a cross-sectional view of the right belt unit 100 shown in Figure 5. Figure 7 is a diagram when a right upper cover 102 and a right lower cover 103 are removed from the right belt unit 100 shown in Figure 5.

As shown in Figure 5, the right belt unit 100 includes, for example, a right belt 101, a right upper cover 102, and a right lower cover 103. As shown in Figure 6, the right belt unit 100 includes, for example, a bar guide 106 for preventing meandering or the like of the right belt 101, a tip rotation shaft 110 for rotating an idler 109, an idler 109 that rotates by receiving power from the right belt 101, a tensioner unit 108 for adjusting slack or the like of the right belt 101, a drive pulley 105 for driving the right belt 101, a drive timing pulley 104 of the right belt 101, and a drive shaft 107. As shown in Figure 7, the right belt unit 100 when the right upper cover 102 and the right lower cover 103 are removed includes, for example, the right belt 101, the tensioner unit 108, the drive timing pulley 104, a tensioner holder 111, a tensioner shaft 112, a right upper holder 113 (plate-shaped member), and a right lower holder 114 (plate-shaped member).

The left belt unit has a configuration similar to the right belt unit except for the point of being connected to the conveying unit 250. For example, the left belt unit has a configuration similar to the configuration of the right belt unit described with reference to Figures 5 to 7.

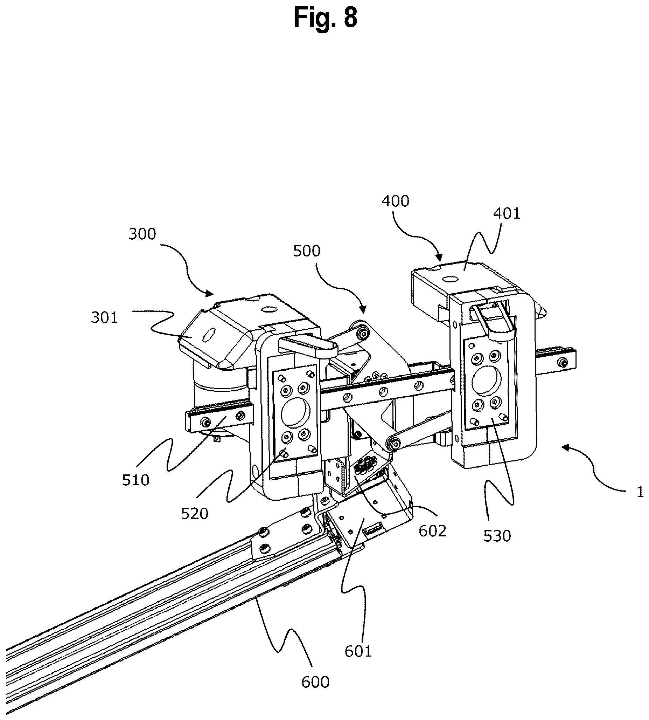

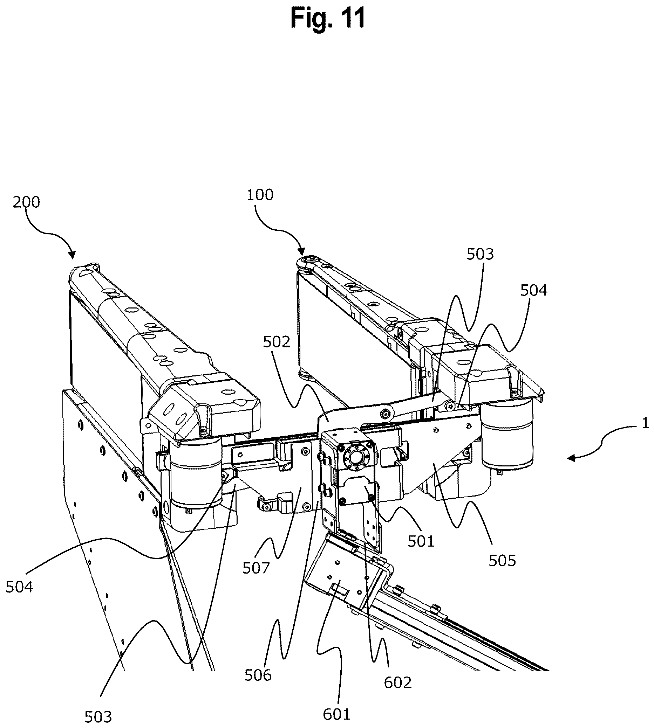

Figure 8 is a perspective view of the hand unit in a state where the right belt unit 100 and the left belt unit 200 of the hand unit 1 shown in Figure 4 are removed (not shown). As shown in Figure 8, the arm unit 600 holds the hand opening/closing unit 500 via components such as a yaw motor 601 and a yaw horn sheet metal 602. For example, the hand opening/closing unit 500 holds a slide rail 510 via a right rail holder 505 shown in Figure 10 and a left rail holder A506 and a left rail holder B507 shown in Figure 11.

The slide rail 510 restricts movement in the up-down direction (short-side direction of the slide rail 510) and can cause a right rail block 511 and a left rail block 512 shown in Figure 10 to slide in the left-right direction (slide rail 510), respectively. Since the right rail block 511 holds the right belt unit 100 and the right motor unit 300, and the left rail block 512 holds the left belt unit 200 and the left motor unit 400, they can be operated in conjunction.

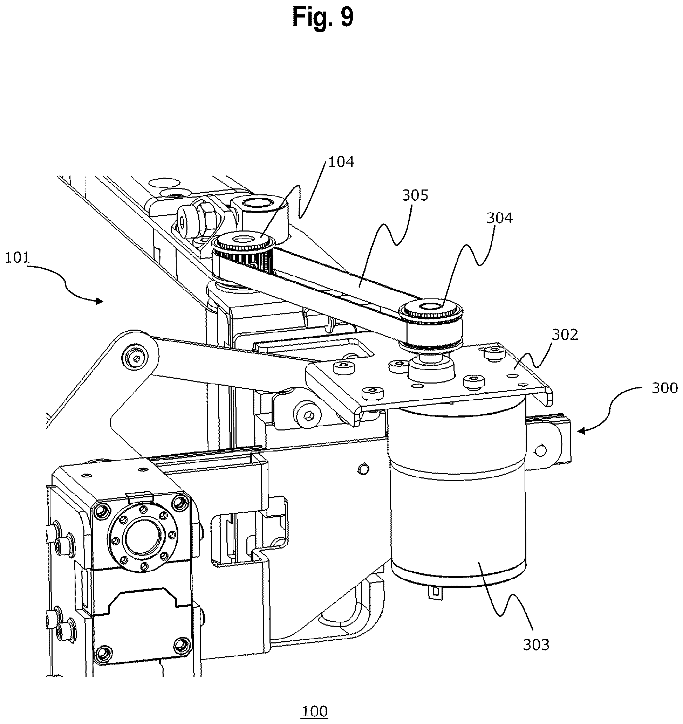

Figure 9 is a perspective view of the right belt unit 100 when a part of the right upper cover 102 of the right motor unit 300 and the right motor cover 301 in Figure 8 are not shown. As described above, the right motor unit 300 is held by a right motor holder 302 via the right rail block 511 and a right belt block 520 shown in Figure 10 via bolts not shown. The right motor holder 302 holds a right motor 303, and a drive timing pulley 304 is attached to the tip portion.

When the right motor 303 operates, the drive timing pulley 304 rotates in conjunction. The teeth of a timing belt 305 mesh with the teeth of the drive timing pulley 304 and rotate in accordance with the drive timing pulley 304. The teeth on the other side of the timing belt 305 mesh with the drive timing pulley 104 of the right belt unit 100 and rotate in accordance with the drive timing pulley 104.

The drive timing pulley 104 is fixed to the drive shaft 107, and the drive shaft 107 is fixed to the drive pulley 105. Therefore, when the right motor 303 operates, the drive pulley 105 rotates, and the right belt 101 rotates due to the frictional force of the drive pulley 105. The left motor unit 400 can also rotate a left belt 201 of the left belt unit 200 by a similar operation.

Figure 10 is a perspective view of the hand unit 1 when the right motor unit 300 and the left motor unit 400 are not shown in Figure 4. A hand opening/closing motor 501 of the hand opening/closing unit 500 is held by a hand opening/closing link A502 via bolts not shown. The hand opening/closing link A502 can rotate in accordance with the rotation of the hand opening/closing motor 501. The hand opening/closing link A502 jointly fixes the right rail block 511 and the right belt block 520, and the left rail block 512 and the left belt block 530, respectively, via a hand opening/closing link B503 and a hand opening/closing link C504. The tip side of the hand opening/closing link A502, both ends of the hand opening/closing link B503, and the hand opening/closing link C504 are rotatably connected by bearing connections.

Here, the opening and closing operation of the right belt unit 100 and the left belt unit 200 of the hand unit 1 is shown below. First, when the hand opening/closing motor 501 is energized by a harness not shown and the rotating shaft rotates counterclockwise, the hand opening/closing link A502 also rotates half clock. At the same time, the hand opening/closing link B503 and the hand opening/closing link B504 on the right belt unit 100 side operate toward the left belt unit 200 side (left side), and the hand opening/closing link B503 and the hand opening/closing link C504 on the left belt unit 200 side operate toward the right belt unit 100 side (right side). In conjunction with that movement, the right rail block 511 moves to the left side along the slide rail 510, and the left rail block 512 moves to the right side along the slide rail 510, whereby the right belt unit 100 and the left belt unit 200 move so as to approach each other. Therefore, the hand unit 1 performs a closing operation.

On the other hand, when the hand opening/closing motor 501 is operated so as to rotate the hand opening/closing link A502 clockwise, the right belt unit 100 and the left belt unit 200 operate so as to separate from each other, and the hand unit 1 performs an opening operation.

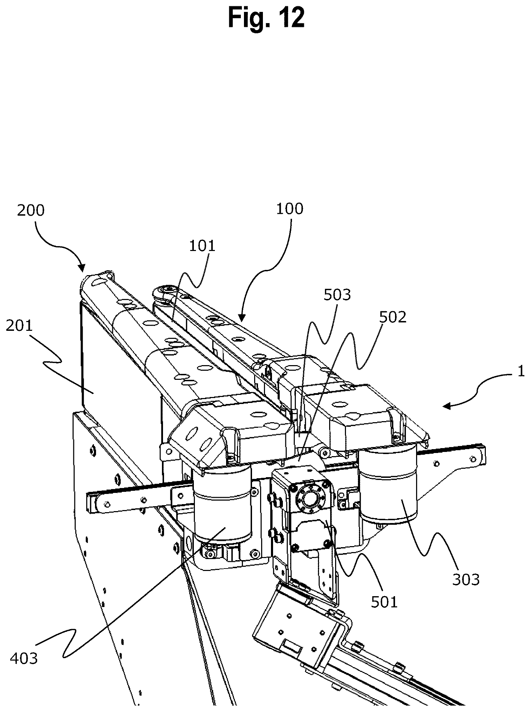

With reference to Figures 11 and 12, the opening and closing operation of the hand unit 1 will be described. Figure 11 is a perspective view showing a state where both belts of the hand unit 1 are open. As described with reference to Figure 10, when the hand opening/closing motor 501 is rotated clockwise, the hand unit 1 performs an opening operation. The right belt unit 100 and the right motor unit 300 are fixed to the right rail block 511, and the left belt unit 200 and the left motor unit 400 are fixed to the left rail block 512. Therefore, the right belt unit 100 and the right motor unit 300 move to the right belt unit 100 side (right side), and the left belt unit 200 and the left motor unit 400 move to the left belt unit 200 side (left side).

Figure 12 is a perspective view showing a state where both belts of the hand unit 1 are closed. As described with reference to Figure 10, when the hand opening/closing motor 501 is rotated counterclockwise, the hand unit 1 performs a closing operation. In accordance with the movement of the right rail block 511 and the left rail block 512, the right belt unit 100 and the right motor unit 300 move to the right belt unit 100 side (right side), and the left belt unit 200 and the left motor unit 400 move to the left belt unit 200 side (left side).

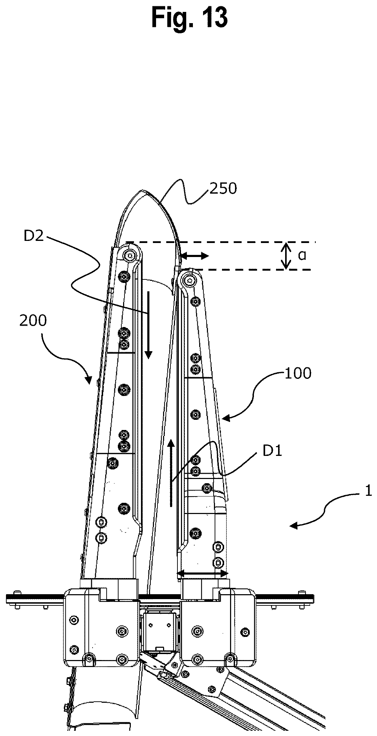

Figure 13 is a top view when the right belt unit 100 and the left belt unit 200 are operated in a state where the hand unit 1 is closed. The harvesting robot 2 closes the hand unit 1 to grip harvested items, and then operates the right belt unit 100 and the left belt unit 200 to separate the harvested items from the cluster and perform harvesting work. As shown in Figure 9, by operating the right motor 303 of the right motor unit 300 clockwise, the right belt 101 rotates clockwise. On the other hand, by operating a left motor 404 of the left motor unit 400 counterclockwise, the left belt 201 rotates counterclockwise. At this time, the rotation direction D1 of the right belt 101 and the rotation direction D2 of the left belt 201 are different (the operation directions of the right belt 101 and the left belt 201 are different), and due to the frictional force by the right belt 101 and the left belt 201, the harvested items operate in a twisted manner, and the harvested items separate from the cluster.

At this time, the right belt unit 100 and the left belt unit 200 are each formed so that the thickness of the tip portion gradually becomes smaller than the thickness of the root portion, resulting in a shape that is easy to enter narrow places during the harvesting operation. Further, the right belt unit 100 and the left belt unit 200 are disposed shifted by, for example, α (α is a predetermined length). Therefore, when the hand unit 1 is closed, a sufficient distance is secured between the tip rotation shaft 110 (see Figure 6) of the right belt unit 100 and a tip rotation shaft (not shown) of the left belt unit 200. Therefore, it is possible to prevent soft harvested items from being crushed.

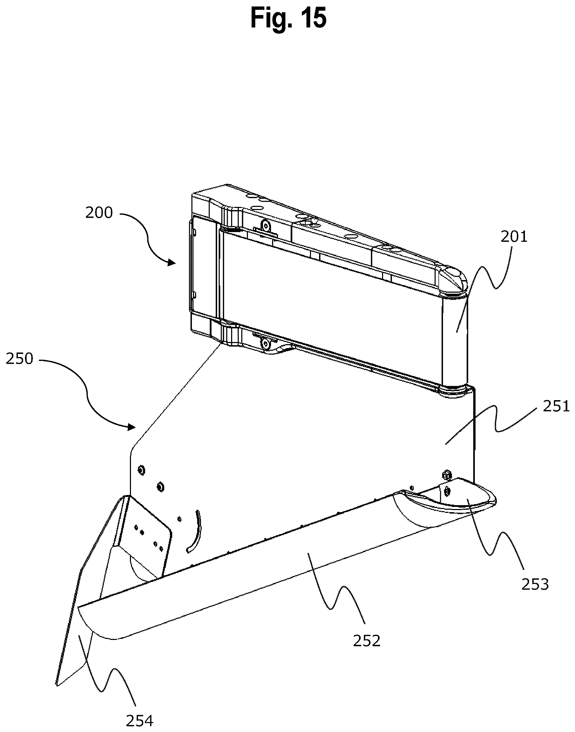

Figure 14 is a side view when the right belt unit 100 and the left belt unit 200 are operated in a state where the hand unit 1 is closed. As shown in Figure 14, the height of a left upper cover 202 of the left belt unit 200 is formed higher than the height of the right upper cover 102 of the right belt unit 100 by, for example, β (β is a predetermined length). As shown in Figure 15, since the hand unit 1 is disposed at an angle with respect to the arm unit 600, with the above-described configuration, it is possible to prevent harvested items from jumping out from the left upper cover 202 side on the left hand unit 200 side due to the rotational force of the right belt 101 and the left belt 201.

Figure 15 is a diagram showing an example of the left belt unit and the conveying unit according to the embodiment. As shown in Figure 15, the left belt unit 200 includes, for example, a conveying unit 250 (conveying member) for conveying at least some tomatoes (targets) separated from a tomato cluster (target group) and adjusting the falling position of the tomatoes. The conveying unit 250 is disposed in the left belt unit 200 with an orientation or inclination according to the falling position of the tomatoes. The conveying unit 250 includes, for example, a half pipe 252, a pipe holder 251 that holds the half pipe 252, a pipe tip cover 253, and a conveying guide 254 (correction member) such as a diagonal brush that corrects the falling trajectory of the tomatoes. At least some tomatoes separated from the tomato cluster have their falling trajectory corrected by the conveying guide 254 and are stored in the harvesting box 5 shown in Figure 1. As described above, the left belt unit 200 includes the conveying unit 250, but the right belt unit 100 may include the conveying unit 250 instead of the left belt unit 200.

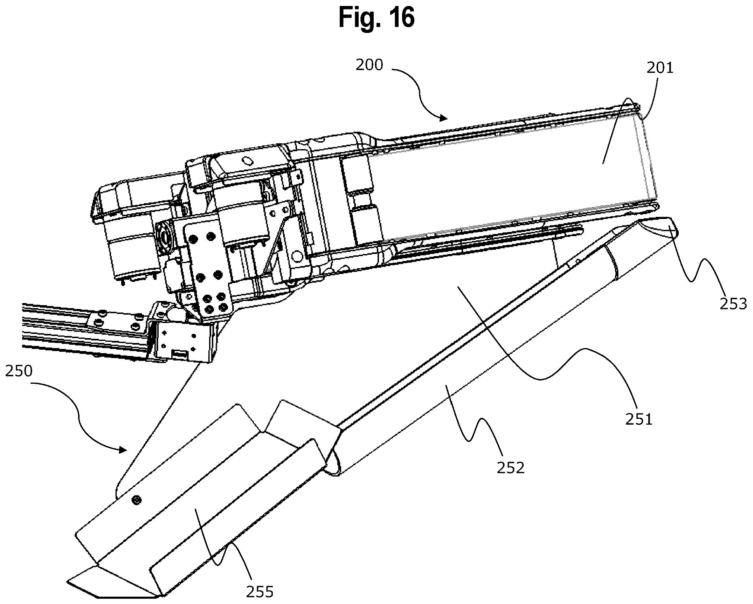

Figure 16 is a diagram showing another example of the left belt unit and the conveying unit according to the embodiment. As shown in Figure 16, the conveying unit 250 may include, for example, instead of the conveying guide 254 shown in Figure 15, a tray 255 (storage portion), which is a dish-shaped component that stores at least some tomatoes separated from the tomato cluster. At least some tomatoes separated from the tomato cluster may be stored in the harvesting box 5 shown in Figure 1 via the tray 255 or may be stored in the harvesting box 5 without going through the tray 255. The tray 255 may be connected to the conveying unit 250 together with the conveying guide 254.

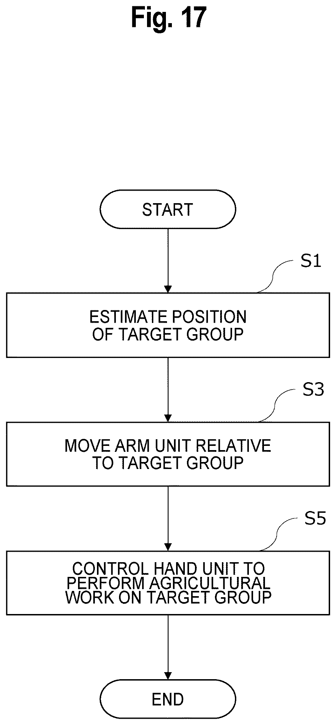

Figure 17 is a flowchart showing an example of a processing flow for executing harvesting work of the harvesting robot according to the embodiment. As shown in Figure 17, the harvesting robot 2 (control PC 10 shown in Figures 2 and 3) estimates, for example, the position of a tomato cluster based on image information obtained by the harvesting camera 13 shown in Figures 1 and 2 imaging the tomato cluster (step S1). The harvesting robot 2 moves, for example, the arm unit 600 shown in Figure 1 relative to the tomato cluster based on the estimated position of the tomato cluster (step S3). The harvesting robot 2 controls, for example, the hand unit 1 shown in Figure 1 to execute harvesting work on the tomato cluster at the position based on the estimated position of the tomato cluster (step S5).

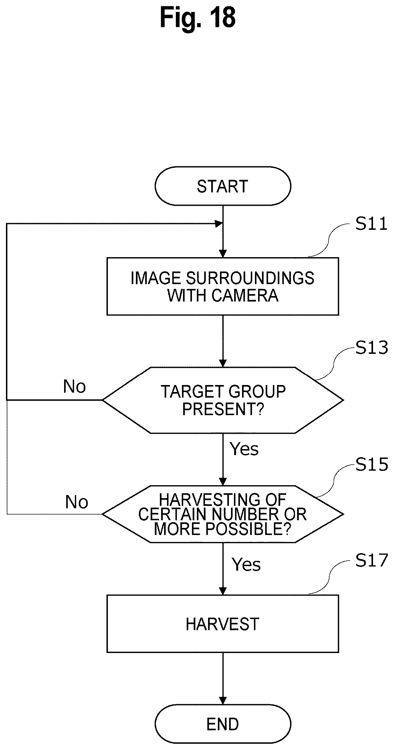

Figure 18 is a flowchart showing another example of an information processing flow of the harvesting robot according to the embodiment. As shown in Figure 18, the harvesting robot 2 shown in Figure 1 images the surroundings of the harvesting robot 2 with the harvesting camera 13 shown in Figures 1 and 2 (step S11). The harvesting robot 2 determines whether a target group is included in the imaging range (step S13). When a target group is not included in the imaging range (in the case of No), the process returns to step S11.

On the other hand, when a target group is included in the imaging range (in the case of Yes), the harvesting robot 2 determines whether harvesting of a certain number or more is possible (step S15). When harvesting of a certain number or more is not possible (in the case of No), the process returns to step S11 to search for another target group. When a plurality of target groups are detected in step S13, it may be determined whether harvesting of a certain number or more is possible for a target group different from the target group for which it was first determined whether harvesting of a certain number or more is possible. When harvesting of a certain number or more is possible (in the case of Yes in step S15), at least some targets are harvested from the target group (step S17).

The processing of steps S13 and S15 will be described in detail below. In order to take as many fruits as possible in one approach, the harvesting robot 2 recognizes the position of the harvesting target under the following conditions (1) to (3).
(1) A certain number or more of red fruits to be harvested are gathered around the target position.
(2) Few immature fruits are present in the grip range where the hand unit 1 approaches around the target position.
(3) There are few obstacles around the target position, and harvesting of a certain number or more can be expected at the time of approach.

Here, when at least one of the conditions (1), (2), and (3) is satisfied, the success probability of harvesting work on the target group is estimated to be high. For example, when all the conditions (1), (2), and (3) are satisfied, the success probability of harvesting work on the target group is estimated to be higher.

First, regarding condition (1), the harvesting robot 2 estimates the position of a fruit group by filtering color point cloud data acquired by the harvesting camera 13 shown in Figures 1 and 2 by color (for example, red) and performing clustering processing. The harvesting robot 2 estimates the number of fruits based on the size of the processed cluster. The harvesting robot 2 may adjust the target red color range by user specification.

Next, regarding condition (2), the harvesting robot 2 filters the color point cloud data with a color different from red (for example, green) and estimates how many immature fruits exist within the grip range from the position of the point cloud. The harvesting robot 2 may adopt an estimation method using a learning model described later instead of or in addition to this estimation method. The grip range is set according to the shape of the hand unit 1 (for example, the shape of the right belt unit 100 and the left belt unit 200). For example, according to the design of the belt width (height), the width (height direction) of targets for harvesting can also be varied. If a hand unit with a large belt width (can harvest a lot in one operation) wraps and takes the entire tomato cluster, there is a risk of also harvesting immature fruits (for example, green fruits). Therefore, it is desirable to set so as to harvest those where fruits at the appropriate harvest time are present more continuously from top to bottom. This is because tomatoes tend to become red from the upper side of the cluster, and the lower side tends to remain immature. For example, it is preferable for the harvesting robot 2 to search for an area where four or more red fruits are estimated to exist and perform a harvesting operation. The set number ("four or more" in the above) (cluster size) included in this area is variable and can be appropriately adjusted.

Regarding condition (3), the harvesting robot 2 filters the color point cloud data with a color different from red (for example, green) and estimates how many obstacles (for example, stems and leaves) exist within the grip range from the position of the point cloud. The harvesting robot 2 may adopt an estimation method using a learning model described later instead of or in addition to this estimation method.

The harvesting robot 2 may further improve the efficiency of harvesting target search time by adopting the following method. The harvesting robot 2 includes, for example, in addition to the harvesting camera 13 shown in Figures 1 and 2, an RGB camera that views a region at a predetermined distance forward of the harvesting camera 13. The harvesting robot 2 recognizes in advance a region where candidates for harvesting targets may exist with this RGB camera. The harvesting robot 2 may stop traveling at a point where harvesting target candidates can be harvested and execute recognition and estimation processing with the harvesting camera 13.

Below, an estimation method of immature fruits and/or obstacles using a learning model will be described more specifically. For example, (1) the harvesting robot 2 estimates an expected value of the number of harvests from RGB images and depth images around the harvesting target position. (2) The harvesting robot 2 similarly estimates the degree of inclusion of immature fruits as in (1) and applies a penalty to the expected value.

(3) The harvesting robot 2 arranges a certain number of approach reference points around the center position of the recognized harvesting target (target group). The harvesting robot 2 executes the estimation of (1) and/or (2) for each approach reference point. The harvesting robot 2 adopts, as an approach position, an approach reference point that has the best evaluation among the points and exceeds a certain standard.

(4) Teacher data can be collected during automatic harvesting as follows. The harvesting robot 2 stores RGB images around the target position as pairs before and after the hand approach. The harvesting robot 2 calculates how many pieces were actually harvested from the difference between the pair of images taken before and after approach. The harvesting robot 2 collects, as correct answer data, how many pieces were actually harvested for the image before approach. The harvesting robot 2 updates the learning model each time automatic harvesting is performed a certain number of times or more. Regarding the hardware configuration of the harvesting robot 2, since it is necessary to make a judgment on whether harvesting is possible or not immediately in order to secure a certain harvesting speed, recognition and estimation processing may be executed within the harvesting robot 2, rather than on a separate server device or the like different from the harvesting robot 2.

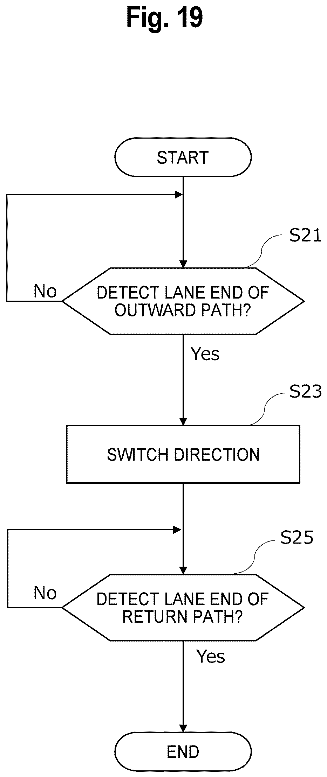

Figure 19 is a flowchart showing an example of movement processing for the harvesting robot to move on a lane. As shown in Figure 19, the harvesting robot 2 shown in Figure 1 determines whether a lane end of the outward path of the lane R has been detected by the lane end detector 11 shown in Figure 2 (step S21). When the lane end of the outward path has not been detected in step S21 (in the case of No), the harvesting robot 2 resumes movement on the lane R. When the lane end of the outward path has been detected in step S21 (in the case of Yes), the harvesting robot 2 switches (changes) direction on the lane R and resumes movement (step S23).

Next, the harvesting robot 2 determines whether a lane end of the return path of the lane R has been detected by the lane end detector 11 (step S25). When the lane end of the return path has not been detected in step S25 (in the case of No), the harvesting robot 2 resumes movement on the lane R. When the lane end of the return path has been detected in step S25 (in the case of Yes), the harvesting robot 2 determines that it has reached the final point of the lane R and ends processing.

The embodiment described above is merely an example of the present invention in all respects. It goes without saying that various improvements and modifications can be made without departing from the scope of the present invention. That is, in carrying out the present invention, a specific configuration according to the embodiment may be appropriately adopted. Further, the embodiments described above are for facilitating understanding of the present invention and are not for limiting interpretation of the present invention. Each element provided in each embodiment and their arrangement, materials, conditions, shape, size, etc. are not limited to those exemplified and can be appropriately changed.

### [Supplementary Notes]

The aspects in the present embodiment include the following disclosures.

### (Supplementary Note 1)

An agricultural work apparatus including:
an arm apparatus having a hand apparatus that performs agricultural work on a target group including a plurality of targets;
an imaging apparatus that images the target group;
a target position estimation unit that estimates a position of the target group based on image information obtained by the imaging apparatus imaging the target group;
an arm apparatus control unit that moves the arm apparatus relative to the target group based on the estimated position; and
a hand apparatus control unit that controls the hand apparatus to perform the agricultural work on the target group at the position based on the estimated position.

### (Supplementary Note 2)

The agricultural work apparatus according to Supplementary Note 1, wherein
the hand apparatus control unit adjusts an orientation or an inclination of the hand apparatus according to an orientation or an inclination of the target group.

### (Supplementary Note 3)

The agricultural work apparatus according to Supplementary Note 1 or 2, wherein
the hand apparatus includes a plate-shaped member and is configured so that a thickness of a tip portion of the hand apparatus is smaller than a thickness of a root portion of the hand apparatus.

### (Supplementary Note 4)

The agricultural work apparatus according to any one of Supplementary Notes 1 to 3, wherein
the hand apparatus control unit controls the hand apparatus so that the hand apparatus applies a frictional force to the target group.

### (Supplementary Note 5)

The agricultural work apparatus according to any one of Supplementary Notes 1 to 4, wherein
the hand apparatus further includes a plurality of belt portions, and
the hand apparatus control unit controls the plurality of belt portions so that the plurality of belt portions twist the target group while sandwiching the target group.

### (Supplementary Note 6)

The agricultural work apparatus according to any one of Supplementary Notes 1 to 5, wherein
the hand apparatus further includes a plurality of belt portions, and
an operation direction of one belt portion of the plurality of belt portions is different from an operation direction of another belt portion.

### (Supplementary Note 7)

The agricultural work apparatus according to any one of Supplementary Notes 1 to 6, wherein
the arm apparatus further includes a conveying member for conveying at least some targets separated from the target group and adjusting a falling position of the targets.

### (Supplementary Note 8)

The agricultural work apparatus according to Supplementary Note 7, wherein
the conveying member is disposed in the arm apparatus with an orientation or an inclination according to the falling position.

### (Supplementary Note 9)

The agricultural work apparatus according to Supplementary Note 7, wherein
a correction member that corrects a falling trajectory of the targets is disposed at a tip portion of the conveying member.

### (Supplementary Note 10)

The agricultural work apparatus according to any one of Supplementary Notes 1 to 9, wherein
the arm apparatus further includes a storage portion that stores at least some targets separated from the target group.

### (Supplementary Note 11)

The agricultural work apparatus according to any one of Supplementary Notes 1 to 10, further including
an estimation unit that estimates a success probability of work on the target group based on image information obtained by the imaging apparatus imaging a predetermined range including the target group and a shape of the hand apparatus.

### (Supplementary Note 12)

The agricultural work apparatus according to any one of Supplementary Notes 1 to 11, wherein
the target group includes a cluster formed by a plurality of targets gathered together.

### (Supplementary Note 13)

A method of performing agricultural work, executed by an agricultural work apparatus including an arm apparatus having a hand apparatus that performs agricultural work on a target group including a plurality of targets and an imaging apparatus that images the target group, the method including the steps of:
estimating a position of the target group based on image information obtained by the imaging apparatus imaging the target group;
moving the arm apparatus relative to the target group based on the estimated position; and
controlling the hand apparatus to perform the agricultural work on the target group at the position based on the estimated position.

### (Supplementary Note 14)

A program for causing an agricultural work apparatus including an arm apparatus having a hand apparatus that performs agricultural work on a target group including a plurality of targets and an imaging apparatus that images the target group to function as:
a target position estimation unit that estimates a position of the target group based on image information obtained by the imaging apparatus imaging the target group;
an arm apparatus control unit that moves the arm apparatus relative to the target group based on the estimated position; and
a hand apparatus control unit that controls the hand apparatus to perform the agricultural work on the target group at the position based on the estimated position.

### Reference Signs List

- 1: Hand unit (hand apparatus)
- 2: Harvesting robot (agricultural work apparatus)
- 13: Harvesting camera (imaging apparatus)
- 21: Target position estimation unit
- 23: Arm unit control unit (arm apparatus control unit)
- 25: Hand unit control unit (hand apparatus control unit)
- 27: Estimation unit
- 101: Right belt (belt portion)
- 113: Right upper holder (plate-shaped member)
- 114: Right lower holder (plate-shaped member)
- 201: Left belt (belt portion)
- 250: Conveying unit (conveying member)
- 254: Conveying guide (correction member)
- 255: Tray (storage portion)
- 600: Arm unit (arm apparatus)

## Claims

1. An agricultural work apparatus comprising:
an arm apparatus having a hand apparatus that performs agricultural work on a target group including a plurality of targets;
an imaging apparatus that images the target group;
a target position estimation unit that estimates a position of the target group based on image information obtained by the imaging apparatus imaging the target group;
an arm apparatus control unit that moves the arm apparatus relative to the target group based on the estimated position; and
a hand apparatus control unit that controls the hand apparatus to perform the agricultural work on the target group at the position based on the estimated position.

2. The agricultural work apparatus according to claim 1, wherein
the hand apparatus control unit adjusts an orientation or an inclination of the hand apparatus according to an orientation or an inclination of the target group.

3. The agricultural work apparatus according to claim 1, wherein
the hand apparatus includes a plate-shaped member and is configured so that a thickness of a tip portion of the hand apparatus is smaller than a thickness of a root portion of the hand apparatus.

4. The agricultural work apparatus according to claim 1, wherein
the hand apparatus control unit controls the hand apparatus so that the hand apparatus applies a frictional force to the target group.

5. The agricultural work apparatus according to claim 1, wherein
the hand apparatus further includes a plurality of belt portions, and
the hand apparatus control unit controls the plurality of belt portions so that the plurality of belt portions twist the target group while sandwiching the target group.

6. The agricultural work apparatus according to claim 1, wherein
the hand apparatus further includes a plurality of belt portions, and
an operation direction of one belt portion of the plurality of belt portions is different from an operation direction of another belt portion.

7. The agricultural work apparatus according to claim 1, wherein
the arm apparatus further includes a conveying member for conveying at least some targets separated from the target group and adjusting a falling position of the targets.

8. The agricultural work apparatus according to claim 7, wherein
the conveying member is disposed in the arm apparatus with an orientation or an inclination according to the falling position.

9. The agricultural work apparatus according to claim 7, wherein
a correction member that corrects a falling trajectory of the targets is disposed at a tip portion of the conveying member.

10. The agricultural work apparatus according to claim 1, wherein
the arm apparatus further includes a storage portion that stores at least some targets separated from the target group.

11. The agricultural work apparatus according to claim 1, further comprising
an estimation unit that estimates a success probability of work on the target group based on image information obtained by the imaging apparatus imaging a predetermined range including the target group and a shape of the hand apparatus.

12. The agricultural work apparatus according to claim 1, wherein
the target group includes a cluster formed by a plurality of targets gathered together.

13. A method of performing agricultural work, executed by an agricultural work apparatus comprising an arm apparatus having a hand apparatus that performs agricultural work on a target group including a plurality of targets and an imaging apparatus that images the target group, the method comprising the steps of:
estimating a position of the target group based on image information obtained by the imaging apparatus imaging the target group;
moving the arm apparatus relative to the target group based on the estimated position; and
controlling the hand apparatus to perform the agricultural work on the target group at the position based on the estimated position.

14. A program for causing an agricultural work apparatus comprising an arm apparatus having a hand apparatus that performs agricultural work on a target group including a plurality of targets and an imaging apparatus that images the target group to function as:
a target position estimation unit that estimates a position of the target group based on image information obtained by the imaging apparatus imaging the target group;
an arm apparatus control unit that moves the arm apparatus relative to the target group based on the estimated position; and
a hand apparatus control unit that controls the hand apparatus to perform the agricultural work on the target group at the position based on the estimated position.
